# EUROPEAN PATENT SPECIFICATION

(11) **EP 2 851 560 B1**
(45) Date of publication and mention of the grant of the patent: **03.08.2016**
(21) Application number: 14180041.7
(22) Date of filing: 06.08.2014
(51) Int. Cl.: F03D 7/02

(54) **Damping an oscillatory movement of a nacelle of a wind turbine**
Dämpfung einer Schwingungsbewegung einer Gondel einer Windenergieanlage
Amortissement de mouvement oscillatoire d'une nacelle d'une éolienne

(30) Priority: 13.09.2013 US 201314026075
(43) Date of publication of application: 25.03.2015
(73) Proprietor: Siemens Aktiengesellschaft, 80333 München (DE)
(72) Inventor: Creaby, Justin, Westminster, CO Colorado 80021 (US); Esbensen, Thomas, 7400 Herning (DK); Hoegh, Gustav, 7400 Herning (DK)

(56) References cited:
- EP-A1- 2 803 853
- EP-B1- 2 146 093
- DE-A1- 19 739 164
- DE-A1-102010 023 887

## Description

### FIELD OF INVENTION

The present invention relates to a method for damping an oscillatory movement of a nacelle of a wind turbine. In particular, the oscillatory movement is coordinated with a yawing movement in an advantageous manner. The invention also relates to a control device for damping such an oscillatory movement. Furthermore, the invention relates to a wind turbine comprising such a control device. Finally, the invention relates to a computer program for damping an oscillatory movement of a nacelle of a wind turbine.

### BACKGROUND OF INVENTION

A wind turbine, in particular a tower of a wind turbine, has to withstand considerable load during its lifetime. A tower may experience extreme loading or fatigue loading. Extreme loading means the maximum/minimum limit that the tower can withstand. Extreme loading may, for example, be experienced during a large, i.e. heavy, wind gust. Fatigue loading means progressive damage to the structure as a result of cyclic loading. Fatigue damage may occur as the tower oscillates in so-called side-side or fore-aft movements in normal operation. It would be highly advantageous to reduce the fatigue load of the tower, because then the tower could be made with less material, e.g. steel, and thereby cost and/or weight might be reduced. Alternatively, the same tower with a reduced fatigue load could have a longer lifetime.

Side-side tower oscillations may be induced by a wind gust, by a yaw movement of a nacelle of the wind turbine, or simply due to the natural variation of the wind. The European patent EP 2 146 093 B1 describes a method to damp side-side tower oscillations by adding a sinusoidal signal to an electrical torque reference or electrical tower reference. However, this involves significant processing and transformation of electrical signals.

The European patent application EP 2 803 853 A1 discloses an improved concept for damping oscillations of a tower of a wind turbine making use of a gyroscopic torque resulting from rotation of the rotor of the wind turbine and a yawing movement of the wind turbine.

Finally, the German patent application DE 10 2010 023 887 A1 discloses another concept for damping oscillations of a tower of a wind turbine, in particular for damping side-to-side oscillations of the tower. This concepts makes use of a method to specifically choose the pitch angle of the rotor blades such that the mentioned side-to-side oscillations of the tower are minimized.

Thus, there exists an urgent need to provide an improved method for damping an oscillatory movement of a nacelle of a wind turbine.

### SUMMARY OF INVENTION

This objective is achieved by the independent claims. The dependent claims describe advantageous developments and modifications of the invention.

In accordance with the invention there is provided a method for damping an oscillatory movement of a nacelle of a wind turbine as specified in claim 1.

The oscillatory movement may also be denoted as a pivoting movement. It includes, for example, a pivoting movement of the tower about a pivot point. It also includes bending of the tower.

Advantageously, the nacelle is attached to the tower via a bearing. The wind turbine is a device that can convert wind energy, i.e. kinetic energy from wind, into mechanical energy. Advantageously, the mechanical energy is subsequently used to generate electricity. A wind turbine is also referred to as a wind power plant.

The change of the yawing speed includes acceleration as well as reduction of the yawing speed. Damping of the oscillatory movement includes reducing, mitigating or even eliminating the oscillatory movement. A damping of the oscillatory movement, e.g. side-side tower oscillations, is advantageous for the wind turbine, in particular for the tower, as this reduces load. Reducing e.g. fatigue load may allow for reduction of the design fatigue load or prolong the tower lifetime. Fatigue has to be understood as a progressive and localised structural damage that occurs when a material is subjected to cyclic loading.

Advantageously, a yaw bearing exists between the nacelle and the tower. The yaw bearing allows a rotation of the nacelle about the yawing axis, the yawing axis being aligned with the longitudinal axis of the tower. If the tower is substantially rotationally symmetric, then the longitudinal axis of the tower is advantageously identical to the axis of symmetry of the tower. One purpose of yawing the nacelle relative to the tower is to reposition, i.e. to follow up or to track, the nacelle with regard to a changing incoming wind direction. This is in particular done in order to reposition rotor blades which are attached to a hub, the hub being connected with the nacelle, with regard to the changing incoming wind direction. In other words, if the incoming wind changes its direction or angle, then advantageously the nacelle is repositioned or yawed into a new rotational position.

If the yaw speed changes, then an angular momentum due to the yawing movement, which is a rotational movement, consequently changes, too. Thus, due to the changing angular momentum a torque is created.

The torque points in the same direction as the angular momentum. Thus, assuming a vertical tower, i.e. assuming a vertical yaw axis, the torque created by an acceleration or reduction of the yaw speed is pointing in vertical direction, too. If a center of mass of the wind turbine is distant from the yaw axis, then, a consequence of the vertical torque is a force which is pointing perpendicular to the yawing axis and perpendicular to a direction of a lever arm between the center of mass and the yawing axis. In this context, the lever arm is defined as a shortest distance from the center of mass to the yawing axis. The force, induced by the torque, may influence the oscillatory movements of the nacelle.

In other words, one aspect of the invention is coordinating the yawing speed such that the torque, which is generated by the change of the yawing speed, induces a force which points, at least partly, in an opposite direction compared to the oscillatory movement and thus is able to damp the oscillatory movement.

It has to be noted that a rotor with rotor blades of the wind turbine does not necessarily have to rotate for the method to work. However, the oscillatory movement can only be damped if the center of mass is distant from the yawing axis.

The method described above is particularly efficient with hard yaws. A hard yaw has a fixed yaw speed but a considerable initial yaw acceleration. This may induce or create high torques. Thus, side-side tower oscillations, for instance, can efficiently be damped. In general, a hard yaw is advantageous, as it is relatively cheap and simply built compared to e.g. a variable speed motor for a yaw drive.

A yaw acceleration is able to generate a force in a side-side direction of the tower and may excite or damp the tower in this direction. The yaw speed is often quite limited in generating a significant force. However, yaw acceleration, in particular yaw acceleration of a hard yaw, may be high enough to generate a considerable force. Thus, in particular for wind turbines with a hard yaw, the method described above is highly beneficial.

It is noted that one aspect of the present invention is based on a finding that nacelle yawing may have a significant impact on side-side tower oscillations. Thus, on the one hand, due to an advantageous scheduling of the yaw activity, for instance a slight postponing of a planned yaw activity, it is able to damp existing side-side tower oscillations. On the other hand, it is also possible to stop, i.e. brake or reduce, advantageously a yaw activity such that side-side tower oscillations which might just have been created by the acceleration of the yaw activity are eliminated. In other words, the yaw movement can be used to damp side-side tower oscillations and in particular timed yaw movements can damp the tower oscillations considerably.

In an advantageous embodiment, the oscillatory movement of the nacelle has a periodic time-dependency and the sign of the oscillatory movement changes periodically. Furthermore, the yawing speed and the oscillatory movement are coordinated such that the time-dependent oscillatory movement is damped.

In another advantageous embodiment, the periodic time-dependency of the oscillatory movement of the nacelle is at least approximately sinusoidal, and the yawing speed and the oscillatory movement are coordinated such that the at least approximately sinusoidal oscillatory movement is damped.

In other words, the method described above works particularly efficiently if the oscillatory movement is a periodic movement, in particular a sinusoidal movement. Side-side oscillations typically can be described by an at least approximately sinusoidal oscillatory movement. An amplitude of the oscillatory movement may be similar during a considerable time span, i.e. the amplitude may be substantially time-independent. Alternatively, the amplitude may change randomly or periodically.

In another advantageous embodiment, the method comprises a further step of measuring a first position of the nacelle with regard to a ground where the wind turbine is erected at a first moment, and measuring at least a second position of the nacelle with regard to the ground at a second moment. Subsequently the periodic time-dependency of the oscillatory movement is determined based on the measured first position and second position.

In practice, it is advantageous to detect and measure a whole set of positions of the nacelle. Thus, a reliable and meaningful time-dependency can be determined.

One way to measure the position is by installing a detector working with a global positioning system (GPS) at the nacelle.

Another advantageous way to measure the position is by an accelerometer which is mounted at the wind turbine. Beneficially, the accelerometer is mounted in the nacelle or at the tower, especially near the top of the tower. The accelerometer is thus highly useful for evaluating the tower movement and time the yaw activity.

In another advantageous embodiment, the nacelle oscillates around a pivot point which is located in a bottom section of the tower.

The bottom section of the tower may be defined as a part of the tower which comprises 10 per cent of the mass of the whole tower. The bottom section of the tower may also be defined by a bottom volume, the bottom volume comprising 10 per cent of a total volume of the tower and being most distant to the nacelle. Advantageously, the bottom section of the tower is directly attached to the ground. In other words, the pivot point is located near the tower base.

The pivot point may lie on the yaw axis. More specifically, it may lie at an intersection of the yaw axis and the ground. If the wind turbine comprises a foundation, the pivot point may be a part of the foundation.

Note that the wind turbine comprises a rotor which is rotatably mounted about a rotor axis of rotation, and the nacelle oscillates in a plane which is substantially perpendicular to the rotor axis of rotation.

Such an oscillatory movement is also referred to as side-side tower oscillations. The notion "side-side" refers to a view of the hub and the rotor blades as viewed from the front.

The invention is also directed towards a control device for damping an oscillatory movement of a nacelle of a wind turbine according to claim 8.

The control device may be located at the tower or the nacelle. The control device advantageously works fully automatically.

The control device is able to perform the method for damping the oscillatory movement of the nacelle described above. Thus, specific details and features of the method also apply to the control device.

The invention is also directed towards a wind turbine for generating electrical power, wherein the wind turbine comprises a control device as described above.

Finally, the invention is also related to a computer program for damping an oscillatory movement of a nacelle of a wind turbine, wherein the computer program, when being executed by a data processor, is adapted for controlling and/or carrying out the method described above.

The aspects defined above and further aspects of the present invention are apparent from the examples of embodiments to be described hereinafter and are explained with reference to the examples of embodiment.

### BRIEF DESCRIPTION OF THE DRAWINGS

Embodiments of the invention are now described, by way of example only, with reference to the accompanying drawings, of which:
Figure 1 shows a wind turbine with a control device,
Figure 2 shows an oscillatory movement of a hub of a wind turbine,
Figure 3 shows a location of a center of mass of a wind turbine, and
Figure 4 shows an example of a load of a tower of a wind turbine due to yawing.

The illustrations in the drawings are schematically.

### DESCRIPTION OF THE DRAWINGS

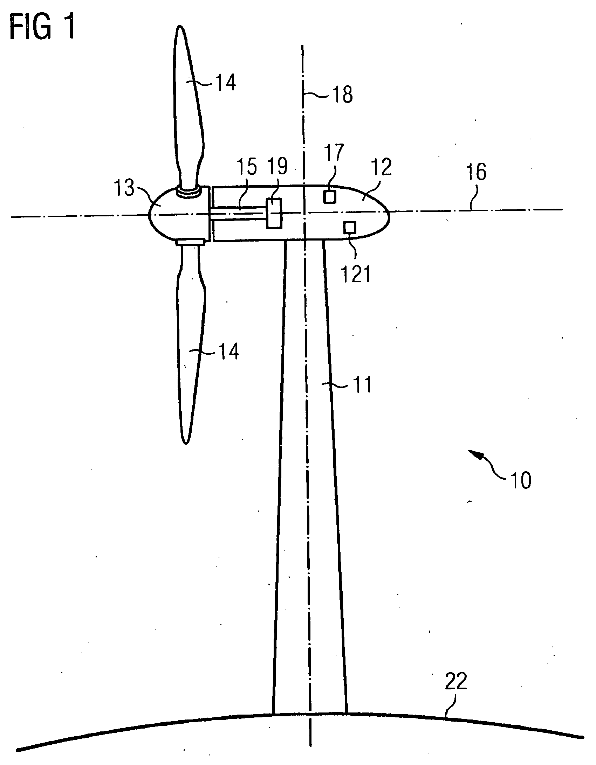

Figure 1 shows a wind turbine 10 which is erected on a ground 22. The wind turbine 10 comprises a substantially cylindrical tower 11 which comprises a longitudinal axis (not explicitly shown). A nacelle 12 is mounted upon the tower 11. An accelerometer 121 for measuring the position of the nacelle 12 relative to the ground 22 is mounted on top of the nacelle 12. The nacelle 12 can be rotated about a yawing axis 18. Furthermore, the wind turbine 10 comprises a main shaft 15 which, on the one side, is connected to a generator 19 for generating electricity and, on the other side, connected to a hub 13. Rotor blades 14 are attached to the hub 13. The main shaft 15, the hub 13 and the rotor blades 14 together are referred to as the rotor of the wind turbine 10. The rotor is mounted about a rotor axis of rotation 16. Finally, the wind turbine 10 comprises a control device 17 for damping an oscillatory movement of the nacelle 12.

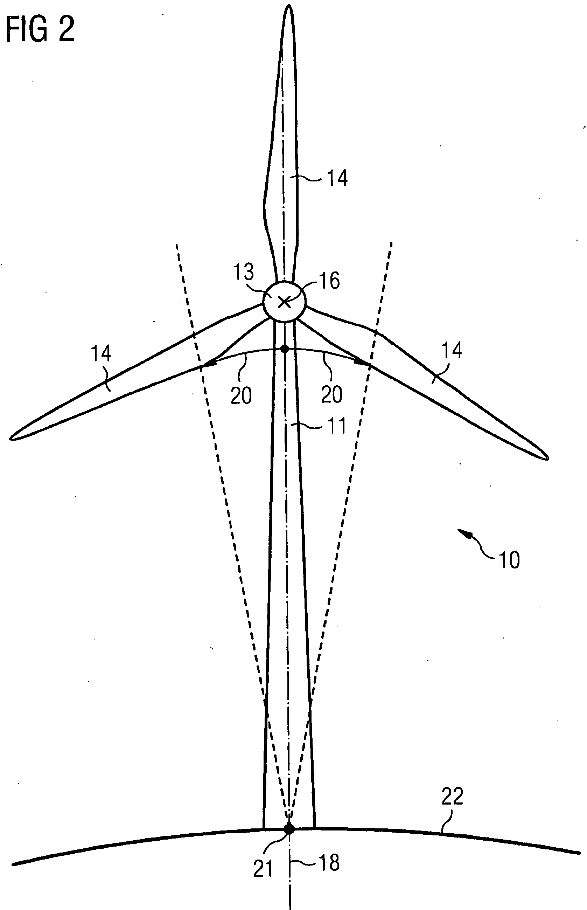

Figure 2 shows a wind turbine 10 in a front view. The wind turbine 10 is erected on a ground 22. The wind turbine 10 comprises a tower 11, a nacelle (not shown) and a hub 13. The hub 13 is connected to a main shaft (not shown) and is rotatably mounted about a rotor axis of rotation 16. Three rotor blades 14 are attached to the hub 13. Furthermore, in Figure 2 an oscillatory movement 20, in particular side-side oscillations, of the hub 13 are shown. This oscillatory movement 20 may for instance be present because of a previous yawing activity of the wind turbine 10.

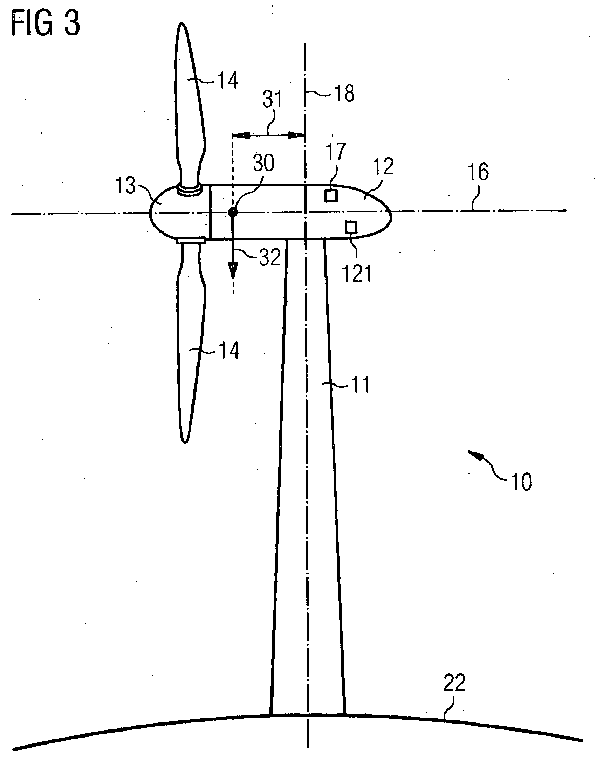

Figure 3 shows a similar wind turbine 10 to the wind turbine 10 shown in Figure 1. Again, the wind turbine 10 comprises a tower 11, a nacelle 12, a hub 13, rotor blades 14, a yawing axis 18 and a rotor axis of rotation 16. A nacelle 12 is mounted upon the tower 11. Again, an accelerometer 121 for measuring the position of the nacelle 12 relative to the ground 22 is mounted on top of the nacelle 12. The wind turbine 10 is erected on a ground 22. Additionally, the wind turbine 10 comprises a control device 17 which is configured to damp an oscillatory movement 20 of the nacelle 12. Additionally, Figure 3 shows a center of mass 30 of the wind turbine 10. As can be seen, the center of mass 30 is shifted, with regard to the yawing axis 18, towards the rotor blades 14 and along the rotor axis of rotation 16,. In other words, there is a lever-arm distance 31 between the center of mass 30 and the yawing axis 18.

Assuming side-side oscillations in a plane which is perpendicular to the rotor axis of rotation 16, these side-side oscillations originate in a force which is perpendicular to the rotor axis of rotation 16 and the yawing axis 18. If in a yawing movement along the yawing axis 18 the yawing speed is changed, then a torque 32 in the same direction as the yawing axis 18 is induced. This, however, induces another force, which is directed in the same direction or in the opposite direction as the force which is responsible for the side-side oscillations. Thus, due to an advantageous timing of the yawing activity, the oscillatory movement 20, i.e. the side-side oscillations, may be damped.

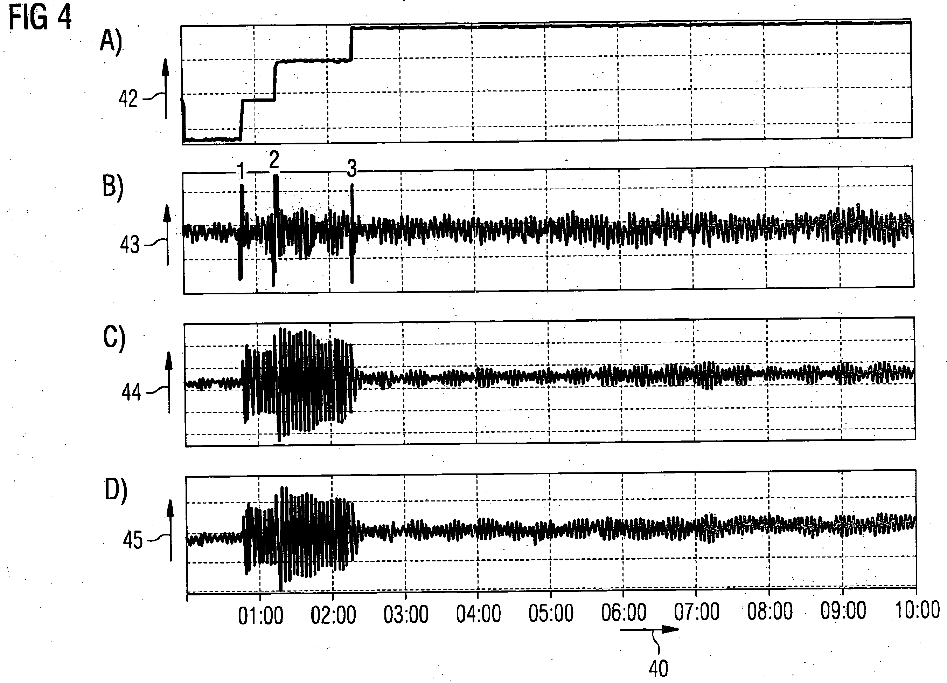

Figure 4 illustrates how yaw activity may affect the movement of the tower. Exemplarily, three yaw movements during a time period of ten minutes are assumed. At the axis of abscissas, i.e. the x-axis, time 40 in minutes is shown. As mentioned, an interval of ten minutes is depicted as an example.

The upper graph (a) shows a yaw direction, characterized by a yawing angle 42. As can be seen, a first yaw movement occurs at approximately 0:50 minutes, a second yaw movement occurs at approximately 1:15 minutes and a third yaw movement occurs at approximately 2:20 minutes. The yaw movements themselves may only comprise relatively small changes in the yawing angle 42, e.g. only comprising a few degrees.

The following graph (b) depicts a torsion moment 43 of a top of the tower in arbitrary units. Each of the three yaw movements induces a distinctive spike in the torsion moment which as a consequence leads to side-side oscillations of the tower as will be described in the following.

Note that in Figure 4 oscillatory movements of the tower of the wind turbine are shown. A nacelle of the wind turbine oscillates likewise, showing a similar time dependency of the oscillatory movements. Thus, the results presented in Figure 4 may also be applied to an oscillatory movement of the nacelle.

The following graph (c) shows a moment of the oscillatory movement of a bottom section of the tower 44 in arbitrary units. Likewise, the lower graph (d) shows a moment of the oscillatory movement of a top section of the towel 45 in arbitrary units. It can be seen that the third yaw movement, occurring at a time of approximately 2:20 minutes, damps the side-side tower oscillations efficiently and almost instantaneously. This is due to the fact that a phase of the excitation makes it act as damping with regard to the ongoing tower oscillatory movement.

## Claims

1. A method for damping an oscillatory movement (20) of a nacelle (12) of a wind turbine (10), the wind turbine (10) comprising a rotor which is mounted about a rotor axis of notation (16) and the nacelle (12) being attached to a tower (11) of the wind turbine (10), wherein the nacelle (12) oscillates in a plane which is substantially perpendicular to the rotor axis of rotation (16), the method comprising:
rotating the nacelle (12) about a yawing axis (18) with a yawing speed, the yawing axis (18) being aligned with a longitudinal axis of the tower (11),
changing the yawing speed, and
coordinating the yawing speed with the oscillatory movement (20) such that a torque (32) resulting from the change of the yawing speed damps the oscillatory movement (20) of the nacelle (12) of the wind turbine (10).

2. The method according to claim 1, wherein
the oscillatory movement (20) of the nacelle (12) has a periodic time-dependency and the sign of the oscillatory movement (20) changes periodically, and
the yawing speed and the oscillatory movement (20) are coordinated such that the time-dependent oscillatory movement (20) is damped.

3. The method according to claim 2, wherein
the periodic time-dependency of the oscillatory movement (20) of the nacelle (12) is at least approximately sinusoidal, and
the yawing speed and the oscillatory movement (20) are coordinated such that the at least approximately sinusoidal oscillatory movement (20) is damped.

4. The method according to claim 2 further comprising:
measuring a first position of the nacelle (12) with regard to a ground (22) where the wind turbine (10) is erected at a first moment,
measuring at least a second position of the nacelle (12) with regard to the ground (22) at a second moment, and
determining the periodic time-dependency of the oscillatory movement (20) of the nacelle (12) based on the measured positions.

5. The method according to claim 4,
wherein the first position of the nacelle (12) and the second position of the nacelle (12) is measured by an accelerometer (121).

6. The method according to claim 5, wherein the accelerometer (121) is mounted at the wind turbine (10).

7. The method according to claim 1,
wherein the nacelle (12) oscillates around a pivot point (21) which is located in a bottom section of the tower (11).

8. A control device (17) for damping an oscillatory movement (20) of a nacelle (12) of a wind turbine (10), the wind turbine (10) comprising a rotor which is mounted about a rotor axis of rotation (16) and the nacelle (12) being attached to a tower (11) of the wind turbine (10), wherein the nacelle (12) oscillates in a plane which is substantially perpendicular to the rotor axis of rotation (16),
wherein the control device (17) is configured to coordinate
a rotation of the nacelle (12) about a yawing axis (18) with a yawing speed, the yawing axis (18) being aligned with a longitudinal axis of the tower (11), and
a change of the yawing speed,
such that a torque (32) resulting from the change of the yawing speed damps the oscillatory movement (20) of the nacelle (12).

9. A wind turbine (10) for generating electrical power, the wind turbine (10) comprising:
a control device (17) according to claim 8.

10. A computer program for damping an oscillatory movement (20) of a nacelle (12) ofa wind turbine (10), the computer program, when being executed by a data processor, is adapted for carrying out the method according to claim 1.

## Patentansprüche

1. Verfahren zum Dämpfen einer Schwingungsbewegung (20) einer Gondel (12) einer Windenergieanlage (10), wobei die Windenergieanlage (10) einen Rotor umfasst, der um eine Rotorrotationsachse (16) herum montiert ist, und die Gondel (12) an einem Turm (11) der Windenergieanlage (10) angebracht ist, wobei die Gondel (12) in einer Ebene schwingt, die im Wesentlichen senkrecht zu der Rotorrotationsachse (16) verläuft, wobei das Verfahren Folgendes umfasst:
Drehen der Gondel (12) mit einer Giergeschwindigkeit um eine Gierachse (18), wobei die Gierachse (18) mit einer Längsachse des Turms (11) auf einer Linie liegt,
Ändern der Giergeschwindigkeit und
Abstimmen der Giergeschwindigkeit auf die Schwingungsbewegung (20), so dass ein durch das Ändern der Giergeschwindigkeit entstehendes Drehmoment (32) die Schwingungsbewegung (20) der Gondel (12) der Windenergieanlage (10) dämpft.

2. Verfahren nach Anspruch 1, bei dem
die Schwingungsbewegung (20) der Gondel (12) eine Abhängigkeit von der Periodendauer aufweist und sich das Vorzeichen der Schwingungsbewegung (20) periodisch ändert und
die Giergeschwindigkeit und die Schwingungsbewegung (20) so abgestimmt sind, dass die zeitabhängige Schwingungsbewegung (20) gedämpft wird.

3. Verfahren nach Anspruch 2, bei dem
die periodische Zeitabhängigkeit der Schwingungsbewegung (20) der Gondel (12) zumindest in etwa sinusförmig ist und
die Giergeschwindigkeit und die Schwingungsbewegung (20) so abgestimmt sind, dass die zumindest in etwa sinusförmige Schwingungsbewegung (20) gedämpft wird.

4. Verfahren nach Anspruch 2, das ferner Folgendes umfasst:
Messen einer ersten Position der Gondel (12) in Bezug zu einem Boden (22), auf dem die Windenergieanlage (10) errichtet ist, zu einem ersten Zeitpunkt,
Messen zumindest einer zweiten Position der Gondel (12) in Bezug zu dem Boden (22) zu einem zweiten Zeitpunkt und
Bestimmen der periodischen Zeitabhängigkeit der Schwingungsbewegung (20) der Gondel (12) auf der Grundlage der Messpositionen.

5. Verfahren nach Anspruch 4,
bei dem die erste Position der Gondel (12) und die zweite Position der Gondel (12) von einem Beschleunigungsmesser (121) gemessen werden.

6. Verfahren nach Anspruch 5,
bei dem der Beschleunigungsmesser (121) an die Windenergieanlage (10) montiert ist.

7. Verfahren nach Anspruch 1,
bei dem die Gondel (12) um einen Drehpunkt (21) schwingt, der sich in einem unteren Abschnitt des Turms (11) befindet.

8. Steuervorrichtung (17) zum Dämpfen einer Schwingungsbewegung (20) einer Gondel (12) einer Windenergieanlage (10), wobei die Windenergieanlage (10) einen Rotor umfasst, der um eine Rotorrotationsachse (16) herum montiert ist, und die Gondel (12) an einem Turm (11) der Windenergieanlage (10) angebracht ist, wobei die Gondel (12) in einer Ebene schwingt, die im Wesentlichen senkrecht zu der Rotorrotationsachse (16) verläuft,
wobei die Steuervorrichtung (17) so konfiguriert ist, dass sie Folgendes abstimmt:
ein Drehen der Gondel (12) mit einer Giergeschwindigkeit um eine Gierachse (18), wobei die Gierachse (18) mit einer Längsachse des Turms (11) auf einer Linie liegt, und
ein Ändern der Giergeschwindigkeit,
so dass ein durch das Ändern der Giergeschwindigkeit entstehendes Drehmoment (32) die Schwingungsbewegung (20) der Gondel (12) dämpft.

9. Windenergieanlage (10) zum Erzeugen von elektrischer Energie, wobei die Windenergieanlage (10) Folgendes umfasst:
eine Steuervorrichtung (17) nach Anspruch 8.

10. Computerprogramm zum Dämpfen einer Schwingungsbewegung (20) einer Gondel (12) einer Windenergieanlage (10), das so ausgelegt ist, dass es, wenn es von einem Datenprozessor ausgeführt wird, das Verfahren nach Anspruch 1 ausführt.

## Revendications

1. Un procédé d'amortissement d'un mouvement oscillatoire (20) d'une nacelle (12) d'une turbine éolienne (10), la turbine éolienne (10) comprenant un rotor qui est monté autour d'un axe de rotation de rotor (16), la nacelle (12) étant fixée à une tour (11) de la turbine éolienne (10), la nacelle (12) oscillant dans un plan qui est sensiblement perpendiculaire à l'axe de rotation de rotor (16), le procédé comprenant :
la rotation de la nacelle (12) autour d'un axe de lacet (18) à une vitesse de lacet, l'axe de lacet (18) étant aligné avec un axe longitudinal de la tour (11),
la modification de la vitesse de lacet, et
la coordination de la vitesse de lacet avec le mouvement oscillatoire (20) de sorte qu'un couple (32) résultant de la modification de la vitesse de lacet amortisse le mouvement oscillatoire (20) de la nacelle (12) de la turbine éolienne (10).

2. Le procédé selon la revendication 1, dans lequel le mouvement oscillatoire (20) de la nacelle (12) possède une dépendance temporelle périodique et le signe du mouvement oscillatoire (20) change périodiquement, et
la vitesse de lacet et le mouvement oscillatoire (20) sont coordonnés de sorte que le mouvement oscillatoire dépendant du temps (20) soit amorti.

3. Le procédé selon la revendication 2, dans lequel la dépendance temporelle périodique du mouvement oscillatoire (20) de la nacelle (12) est au moins approximativement sinusoïdale, et
la vitesse de lacet et le mouvement oscillatoire (20) sont coordonnés de sorte que le mouvement oscillatoire au moins approximativement sinusoïdal (20) soit amorti.

4. Le procédé selon la revendication 2, comprenant en outre :
la mesure d'une première position de la nacelle (12) par rapport à un sol (22) sur lequel la turbine éolienne (10) est érigée à un premier instant,
la mesure d'au moins une deuxième position de la nacelle (12) par rapport au sol (22) à un deuxième instant, et
la détermination de la dépendance temporelle périodique du mouvement oscillatoire (20) de la nacelle (12) en fonction des positions mesurées.

5. Le procédé selon la revendication 4,
dans lequel la première position de la nacelle (12) et la deuxième position de la nacelle (12) sont mesurées par un accéléromètre (121).

6. Le procédé selon la revendication 5, dans lequel l'accéléromètre (121) est monté sur la turbine éolienne (10).

7. Le procédé selon la revendication 1,
dans lequel la nacelle (12) oscille autour d'un point de pivot (21) qui est situé dans une section inférieure de la tour (11).

8. Un dispositif de commande (17) destiné à l'amortissement d'un mouvement oscillatoire (20) d'une nacelle (12) d'une turbine éolienne (10), la turbine éolienne (10) comprenant un rotor qui est monté autour d'un axe de rotation de rotor (16), la nacelle (12) étant fixé à une tour (11) de la turbine éolienne (10), la nacelle (12) oscillant dans un plan qui est sensiblement perpendiculaire à l'axe de rotation de rotor (16),
le dispositif de commande (17) étant configuré de façon à coordonner
une rotation de la nacelle (12) autour d'un axe de lacet (18) à une vitesse de lacet, l'axe de lacet (18) étant aligné avec un axe longitudinal de la tour (11), et
une modification de la vitesse de lacet,
de sorte qu'un couple (32) résultant de la modification de la vitesse de lacet amortisse le mouvement oscillatoire (20) de la nacelle (12).

9. Une turbine éolienne (10) destinée à la génération d'énergie électrique, la turbine éolienne (10) comprenant :
un dispositif de commande (17) selon la revendication 8.

10. Un programme informatique destiné à l'amortissement d'un mouvement oscillatoire (20) d'une nacelle (12) d'une turbine éolienne (10), le programme informatique, lorsqu'il est exécuté par un processeur de données, étant adapté de façon à exécuter le procédé selon la revendication 1.
